# EUROPEAN PATENT APPLICATION

(11) **EP 2 481 782 A2**
(43) Date of publication of application: **01.08.2012**
(21) Application number: 12152910.1
(22) Date of filing: 27.01.2012
(51) Int. Cl.: C09D 11/10, G02B 6/00

(54) **Ultraviolet curing type ink-jet for light guide plate, and light guide plate using the same**

(30) Priority: 31.01.2011 JP 2011018588
(71) Applicant: Sumitomo Chemical Company Limited, Tokyo 104-8260 (JP); Seiren Co., Ltd., Fukui-shi Fukui 918-8560 (JP)
(72) Inventor: Hyakuta, Kentarou, Ehime, 792-0015 (JP); Nishino, Shotaro, Ehime, 792-0015 (JP); Terasawa, Hideyuki, Fukui, 918-8560 (JP)
(74) Representative: Duckworth, Timothy John

(57) **Abstract**

An ultraviolet curing type ink-jet ink for a light guide plate comprising: a pigment; a photopolymerizable component; and a photopolymerization initiator, wherein the photopolymerizable component is composed of a photopolymerizable compound having no hydroxyl group.

## Description

### BACKGROUND OF THE INVENTION

### Field of the Invention

The present invention relates to an ultraviolet curing type ink-jet ink for a light guide plate, and the light guide plate using the same.

### Related Background Art

A transmission-type image display device such as a liquid-crystal display device generally has a surface light source device as a backlight. An edge-light type surface light source device includes a light guide plate having a transparent resin sheet, and a light source for supplying a light to the end face of the transparent resin sheet. The light which has been incident from the end face of the transparent resin sheet is reflected by reflection means such as reflective dots provided on the rear face side of the transparent resin sheet, and a planar light for image display is supplied from an exit face of the light guide plate.

A method of applying an ink-jet printing using an ink-jet ink is proposed as a method of forming reflective dots (orientation pattern) (Japanese Patent Laid-Open No. 2006-136867). The ink-jet printing is expected to be capable of easily forming the reflective dots having a configuration of a desired pattern.

### SUMMARY OF THE INVENTION

However, when the light guide plate having the reflective dots formed with the ink-jet printing is incorporated in the image display device, there has been the case in which the shape of the reflective dots becomes irregular, and the pattern cannot be maintained so as to be designed.

Then, an object of the present invention is to reduce irregularities of the shape of the reflective dots on the light guide plate, when the reflective dots of the light guide plate to be used for the surface light source device are formed with the ink-jet printing.

The present invention relates to an ultraviolet curing type ink-jet ink for a light guide plate, which includes a pigment, a photopolymerizable component and a photopolymerization initiator. In the ink-jet ink according to the present invention, the photopolymerizable component is composed of a photopolymerizable compound having no hydroxyl group.

During handling the light guide plate such as transportation and incorporation into a display device, a dirt such as a dust occasionally deposits on the surface of the light guide plate. As a method for simply removing this dirt, the surface of the light guide plate is occasionally wiped off with a cloth dampened with an alcohol, or the like. When the dirt is wiped off with the alcohol, the shape of the reflective dot occasionally becomes irregular, because the reflective dot is affected by the alcohol. The reflective dots formed of the above described ink-jet ink according to the present invention have high resistance to the alcohol, and as a result, irregularities of the shape of the reflective dots of the light guide plate can be remarkably reduced.

The photopolymerizable component preferably includes an aliphatic urethane (meth)acrylate having no hydroxyl group. The reflective dots having high adhesion strength, hardness and abrasion resistance can be formed by making the ink contain the aliphatic urethane (meth)acrylate. From a similar viewpoint, it is more preferable that the glass transition temperature of the aliphatic urethane (meth)acrylate is 40°C or higher.

The photopolymerizable component preferably includes a photopolymerizable monomer and a photopolymerizable oligomer. Thereby, the reflective dots having high adhesion strength, hardness and abrasion resistance can be formed.

It is preferable that the pigment includes at least one inorganic oxide particle selected from the group consisting of a calcium carbonate particle, a barium sulfate particle and a titanium dioxide particle, and a cumulative 50% particle size D50 of the pigment is 200 to 1000 nm. Thereby, the reflective dots can secure sufficient light diffusion performance and reflective performance while the amount of the pigment to be used is maintained low. Furthermore, such pigment can make a light supplied from a surface light source device have a more natural color tone. In addition, an excellent effect of reducing in-plane color unevenness can be also obtained.

In another aspect, the present invention relates to a method for manufacturing a light guide plate, which includes: a step of printing a pattern with the ink-jet ink according to the present invention on a surface of a transparent resin sheet by ink-jet printing; and a step of curing the ink-jet ink forming the pattern with ultraviolet rays to form reflective dots.

According to the method of the present invention, the light guide plate can be obtained, which can supply a light having a natural color tone. In addition, by the combination of the ink-jet printing with the subsequent ultraviolet curing process, the ink can be utilized with less waste and higher productivity can be obtained.

In a further another aspect, the present invention relates to a light guide plate which includes a transparent resin sheet and reflective dots provided on the transparent resin sheet. The light guide plate according to the present invention is a light guide plate which can be obtainable by the method according to the present invention.

In a further another aspect, the present invention relates to a surface light source device including the light guide plate according to the present invention, and a light source supplying a light to the end face of the light guide plate. Furthermore, the present invention relates to a transmission-type image display device which includes this surface light source device, and a transmission-type image display unit provided opposite to the exit face of the surface light source device.

According to the light guide plate and the surface light source device according to the present invention, irregularities of the shape of the reflective dots on the light guide plate can be reduced. In addition, the transmission-type image display device according to the present invention can display an image of high quality based on the surface light source having a natural color tone while reducing a manufacturing cost when the image area of the image display device has been enlarged by adopting the ink-jet printing.

When reflective dots of a light guide plate to be used for a surface light source device is formed by the ink-jet printing, the ink-jet ink according to the present invention can reduce irregularities of the shape of the reflective dots of the light guide plate. Furthermore, the ink-jet ink can form the reflective dots having high hardness and excellent durability. In addition, the present invention can exhibit excellent effect also in the point of being capable of supplying a light having a natural color tone while preventing yellow coloration and the like.

### BRIEF DESCRIPTION OF THE DRAWINGS

FIG. 1 is a sectional view illustrating one embodiment of a transmission-type image display device provided with a surface light source device; and
FIG. 2 is a perspective view illustrating one embodiment of a method for manufacturing a light guide plate.

### DESCRIPTION OF THE PREFERRED EMBODIMENTS

Preferred embodiments according to the present invention will be described in detail below. However, the present invention is not limited to the following embodiments.

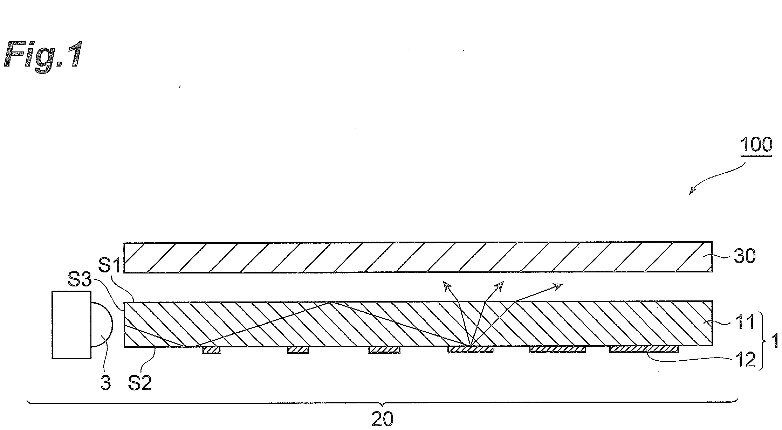

FIG. 1 is a sectional view illustrating one embodiment of a transmission-type image display device provided with a surface light source device. The transmission-type image display device 100 illustrated in FIG. 1 is mainly constituted by a surface light source device 20 and a transmission-type image display unit 30. The surface light source device 20 is an edge-light type surface light source device including a light guide plate 1 having a transparent resin sheet 11 and a light source 3 provided along an end face S3 of the transparent resin sheet 11. The transparent resin sheet 11 has an exit face S1 and a rear face S2 in the opposite side of the exit face, and the light guide plate 1 further has reflective dots 12 provided on the rear face S2 side. The transmission-type image display unit 30 is arranged so as to oppose to the light guide plate 1 in the exit face S1 side of the light guide plate 1. The transmission-type image display unit 30 is, for instance, a liquid-crystal display unit having a liquid-crystal cell.

A light emitted from the light source 3 enters into the transparent resin sheet 11 from an end face S3. The light which has been entered into the transparent resin sheet 11 is irregularly reflected on the reflective dots 12 and exits mainly from the exit face S1. The light which has exited from the exit face S1 is supplied to the transmission-type image display unit 30. The pattern of the reflective dots 12 is arranged so that a uniform planar light can efficiently exit from the exit face S1. The adjacent reflective dots 12 may be separated from each other or also may be connected with each other.

The transparent resin sheet 11 is preferably a poly (meth)alkyl acrylate resin sheet, a polystyrene sheet or a polycarbonate-based resin sheet, and among them, a polymethyl methacrylate resin sheet (PMMA resin sheet) is preferable. The transparent resin sheet 11 may also contain diffusing particles. The surface (exit face S1) in the opposite side of a surface (rear face S2) of the transparent resin sheet 11, on which the reflective dots 12 are formed, may be a flat surface as described in the present embodiment, but may also have a shape of concavity and convexity. The transparent resin sheet 11 preferably has a thickness of 1.0 mm or more and 4.5 mm or less.

The reflective dots 12 preferably has the maximum thickness of 20 µm or less, and more preferably of 15 µm or less. The yellow index is preferably 10 or less, which is evaluated on the basis of the spectral transmittance measurement of a light which has transmitted through the reflective dot 12 and the transparent resin sheet 11 in a perpendicular line direction of the exit face S1. The above described yellow index can be measured by printing an ink-jet ink used for forming the reflective dots on the whole one side of the transparent resin sheet, curing the printed ink to prepare a sample for measurement, which has a reflective film having the same thickness as that of the reflective dots, and using the sample for measurement. The yellow index of 10 or less can be easily achieved, for instance, by the combination of the PMMA resin sheet with an ink-jet ink which will be described later. The details of the method for measuring the yellow index will be described in Examples which will be described later.

The light source 3 may be a linear light source such as a cold cathode fluorescent lamp (CCFL), but is preferably a point light source such as an LED. In this case, a plurality of point light sources are arrayed along at least one side out of four sides which constitute a rectangular main face of the transparent resin sheet 11. In order to obtain a light having a natural color tone, it is particularly advantageous to combine the reflective dots to be formed by the ink-jet ink, which will be described later, with the LED.

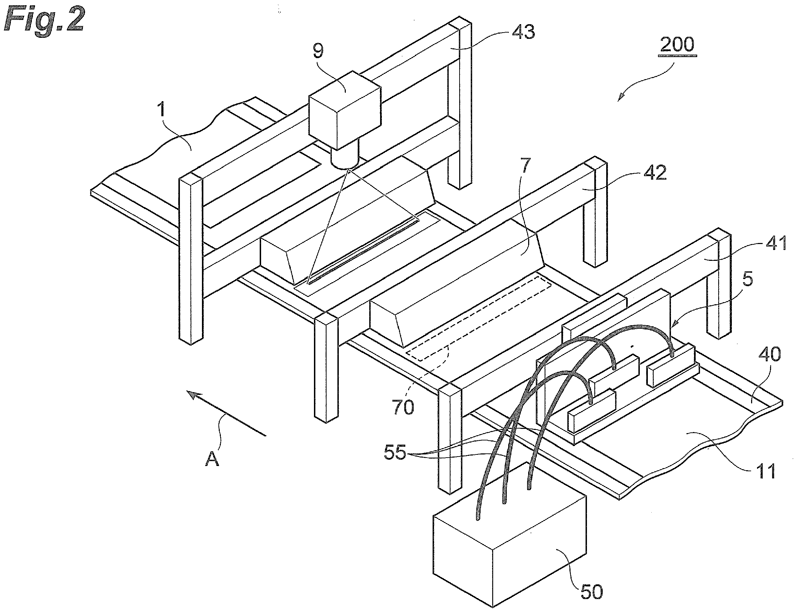

FIG. 2 is a perspective view illustrating one embodiment of a method for manufacturing a light guide plate. An device 200 illustrated in FIG. 2 for manufacturing the light guide plate is structured by transporting means 40 for transporting the transparent resin sheet 11, an ink-jet head 5, a UV lamp 7 and an inspection device 9. The ink-jet head 5, the UV lamp 7 and the inspection device 9 are arranged sequentially in this order from the upstream side in a moving direction A of the transparent resin sheet.

The transparent resin sheet 11 is continuously or intermittently transported along the direction A by the transporting means 40. The transparent resin sheet 11 may also be previously cut so as to match the size of the light guide plate to be manufactured, or may also be cut after the reflective dots 12 have been formed on the long transparent resin sheet 11. The transporting means 40 in the present embodiment is a table shuttle, but is not limited to it, and may also be, for instance, a belt conveyor, a roller or an air levitation transfer.

A droplet ink-jet ink is deposited on the surface of the transparent resin sheet 11 by the ink-jet head 5 supported by a support unit 41, so as to form a pattern comprised of the dot-shaped ink. At this time, the plurality of the dots which have been formed from the printed ink may be separated from each other or may also be connected with each other. The ink-jet head 5 has a plurality of nozzles arrayed and fixed in one row or more rows in the whole width direction (direction perpendicular to A) of a region in which the reflective dots are formed on the surface of the transparent resin sheet 11, so as to oppose to the rear face S2 of the transparent resin sheet 11. The ink in the droplet state, which has been discharged from the plurality of the nozzles by an ink-jet system, is simultaneously and collectively printed in the whole width direction of the transparent resin sheet 11. The ink is printed preferably while the transparent resin sheet 11 is continuously moved at a fixed speed. Alternatively, the ink can also be efficiently printed so as to have a pattern composed of a plurality of rows of dots, by repeating an operation of printing the ink in a state in which the transparent resin sheet 11 is stopped, moving the transparent resin sheet 11 to a next printing position, and stopping the movement. The moving speed of the transparent resin sheet 11 is controlled so that the ink may be printed appropriately. In the case of the present embodiment, the ink-jet head 5 is constituted by a plurality of units having the plurality of the nozzles, respectively. The plurality of the units are arranged so that the end parts thereof overlap each other in a direction A of transporting the transparent resin sheet 11. Occasionally, the ink-jet head may also be used which has a plurality of nozzles that are arranged in series, in the whole width direction of the region in which the reflective dots are formed on the surface of the transparent resin sheet.

In the case of the present embodiment, the ink can be collectively printed in the whole width direction of the transparent resin sheet 11, in a state in which the plurality of the nozzles of the ink-jet head 5 are fixed. Thereby, the productivity for the light guide plate is significantly enhanced compared to the case in which the ink is subsequently printed while a movable nozzle is moved along the width direction of the transparent resin sheet 11. When a large-sized light guide plate having the transparent resin sheet with the length of 200 mm or longer and 1000 mm or shorter in a short side is manufactured, in particular, an effect of enhancing the productivity according to the method of the present embodiment is large. Furthermore, according to the ink-jet method, even the fine reflective dots having, for instance, the largest diameter of 100 µm or less can be easily and accurately formed. When the transparent resin sheet is thin, the reflective dots can be seen through from the exit face S1 side, but the phenomenon can be prevented by making the reflective dots small. A large reflective dot also can be formed if the inks supplied from the plurality of the nozzles are connected with each other.

The nozzle of the ink-jet head 5 is connected to an ink supply unit 50 through a duct 55. The ink supply unit 50 has, for instance, an ink tank in which an ink has been accommodated and a pump for sending the ink out. The plurality of the ducts 55 may be connected to a single ink tank, or may also be connected to a plurality of ink tanks, respectively.

The ink-jet ink which is used in ink-jet printing to form the reflective dots 12 is an ultraviolet curing type ink which includes a pigment, a photopolymerizable component and a photopolymerization initiator.

The pigment is preferably at least one inorganic oxide particle selected from the group consisting of a calcium carbonate particle, a barium sulfate particle and a titanium dioxide particle. The pigment preferably has a cumulative 50% particle size D50 of 200 to 1000 nm, more preferably 250 to 800 nm, and further preferably 300 to 600 nm. The titanium dioxide particle having the cumulative 50% particle size D50 in a range of 200 to 1000 nm can be obtained by appropriately selecting a product on the basis of a particle size distribution from commercialized products. The content ratio of the pigment in the ink is usually approximately 0.5 to 15.0 mass% with reference to the total mass of the ink. Any ink is an ink which utilizes an inorganic substance as a pigment, and calcium carbonate having the smallest specific gravity among three types of the inorganic oxides is desirable, when considering the preservation stability of the ink, in other words, the sedimentation properties of the inorganic pigment.

The photopolymerizable component is comprised of a photopolymerizable monomer and/or a photopolymerizable oligomer, which have a photopolymerizable functional group such as a vinyl group and have no hydroxyl group. The content ratio of the photopolymerizable monomer having no hydroxyl group is preferably 65 to 75 mass% with reference to the total mass of the ink. The content ratio of the photopolymerizable oligomer having no hydroxyl group is preferably 10 to 20 mass% with reference to the total mass of the ink.

The photopolymerizable monomer having no hydroxyl group is selected, for instance, from among 1,4-butanediol diacrylate (for instance, SR213 made by Sartomer Japan Inc.), 1,6-hexanediol diacrylate (for instance, SR238F made by Sartomer Japan Inc.), 1,3-butylene diacrylate (for instance, SR212 made by Sartomer Japan Inc.), 1,9-nonanediol diacrylate (for instance, A-NOD-N made by Shin Nakamura Chemical Co., Ltd.), and propoxylated (2) neopentyl glycol diacrylate (for instance, SR9003 made by Sartomer Japan Inc.).

The photopolymerizable oligomer having no hydroxyl group preferably includes an aliphatic urethane (meth)acrylate (for instance, CN985B88 and CN991 made by Sartomer Japan Inc.). The aliphatic urethane (meth) acrylate is a photopolymerizable oligomer which has a polyurethane oligomer chain formed of an aliphatic polyisocyanate and an aliphatic polyol, and an acrylate group or a methacrylate group which is bonded thereto. The aliphatic urethane (meth)acrylate has a glass transition temperature preferably of 40°C or higher.

The photopolymerizable component in the ink preferably does not substantially include a photopolymerizable compound having a hydroxyl group, but can occasionally include a small amount of the photopolymerizable compound having the hydroxyl group in such a range as not to deviate from the spirit of the present invention. In the case, the content ratio of the photopolymerizable compound having the hydroxyl group is usually 5 mass% or less with reference to the total mass of the ink.

The photopolymerization initiator can be appropriately selected from among photopolymerization initiators which are usually used in the field of an ultraviolet curing type resin. The content ratio of the photopolymerization initiator in the ink is usually approximately 0.5 to 10.0 mass% with reference to the total mass of the ink.

The ink-jet ink may also include a component other than the pigment, the photopolymerizable component and the photopolymerization initiator in such a range as not to deviate from the spirit of the present invention.

A viscosity of the ink-jet ink at 50 ± 10°C is preferably 5.0 to 15.0 mPa·s, and more preferably 8.0 to 12.0 mPa·s. The viscosity of the ink-jet ink can be adjusted, for instance, by a weight average molecular weight and/or a content ratio of the aliphatic urethane (meth)acrylate. When the weight average molecular weight and the content ratio of the aliphatic urethane (meth)acrylate increase, the viscosity of the ink tends to increase.

A surface tension of the ink-jet ink at 25.0°C is preferably 25.0 to 45.0 mJ/m², and more preferably of 25.0 to 37.0 mJ/m². The surface tension of the ink-jet ink can be adjusted, for instance, by blending a silicon-based surface active agent and a fluorine-based surface active agent into the ink.

The printed ink is cured in a region 70 by a UV lamp 7 which is supported by a support unit 42. Thereby, the reflective dots 12 constructed by the cured ink is formed.

After that, the light guide plate 1 is obtained through the step in which an inspection device 9 supported by a support unit 43 inspects the state of the formed reflective dots 12. The light guide plate 1 is cut off into a desired size, as needed. The light guide plate does not necessarily need to be continuously inspected by the inspection device provided in the downstream side of the ink-jet head, as in the present embodiment, but the light guide plate can be also inspected off-line by an inspection device which has been separately prepared. Alternatively, the inspection step of the light guide plate by the inspection device can be occasionally omitted. The obtained light guide plate preferably passes through a step of alcohol cleaning of wiping off the surface with a waste dampened with an alcohol such as isopropyl alcohol and is used for the manufacture of a surface light source device and an image display device.

### Examples

The present invention will be more specifically described below with reference to Examples. However, the present invention is not limited to these Examples.

### Example 1

A mixture was prepared that contained: 7.8 mass% of titanium dioxide particles (TIPAQUE CR-95 produced by ISHIHARA SANGYO KAISHA, LTD., rutile type, TiO₂ rate of 97%), which work as a pigment and have been surface-treated with Al, Si and an organic substance; 14.6 mass% of an aliphatic polyurethane acrylate (CN985B88 produced by Sartomer Japan Inc.) which works as a photopolymerizable oligomer; 9.7 mass% of isobornyl acrylate (LIGHT ACRYLATE IBXA produced by Kyoeisha Chemical Co., Ltd.) and 58.2 mass% of 1,4-butanediol diacrylate (SR213 produced by Sartomer Japan Inc.), which work as a photopolymerizable monomer; 4.9 mass% of hydroxy hexyl phenylethyl ketone (IRGACURE 184 produced by BASF Japan Ltd.), 2.9 mass% of phenylbis (2,4,6-trimethylbenzoyl) phosphine oxide (IRGACURE 819 produced by BASF Japan Ltd.), and 0.1 mass% of 4,4'-[1,10-dioxo-1,10-decanediyl] bis(oxy)bis[2,2,6,6-tetramethyl]-1-piperidinyloxy (Irgastab UV10 produced by BASF Japan Ltd.), which work as a photopolymerization initiator; and 1.8 mass% of an organic polymer (SOLSPERSE 36000 produced by The Lubrizol Corporation), which works as a pigment dispersing agent: and then was treated with a bead mill dispersing device so that the pigment was dispersed. An ultraviolet curing type ink-jet ink was obtained by removing impurities from the mixture in which the pigment has been dispersed, through filtration.

A cumulative 50% particle size D50 (volume average particle size) of the titanium dioxide particles used as the pigment was measured with a dynamic light scattering method (photon correlation method) using Malvern Zetasizer Nano S produced by Spectris Co., Ltd. A dispersion liquid for measurement was prepared by diluting approximately 1g of ink into 100 times with cyclohexanone. The dispersion liquid was irradiated with an ultrasonic wave for 10 minutes by using an ultrasonic washing machine or a homogenizer. Subsequently, the dispersion liquid was charged into a sample-charging port of Zetasizer Nano S and the particle size and volume of the pigment were measured. The D50 is a particle size of particles at the point at which an integrated volume reached 50% with respect to the total volume of all the particles, when the particle size and volume of all the particles were measured and the volume was sequentially integrated from particles having a smaller particle size. The D50 of the pigment was 350 nm.

The viscosity of the ink at 40°C was 8.7 mPa·s, and the surface tension of the ink at 25°C was 37.0 mJ/m².

The obtained ink was applied onto the whole surface of one side of a PMMA resin sheet with 50 mm squares and a thickness of 4 mm by using a bar coater, the applied ink was cured by irradiation with ultraviolet rays, and a piece of a sample for measuring spectral transmittance was obtained, which had a reflective film formed from the ink thereon. As a result of having measured the thickness of the reflective film of the obtained sample by using Decktack (Large Sample Profier FP 10 produced by Toho Technology Corporation), the thickness was 4.5 µm. The conditions of irradiation with ultraviolet rays are described below.

### UV irradiation conditions

Lamp: two metal halide lamps (concentrating type)
Output: 120 W/cm
Irradiation period of time: 0.5 second
Irradiation distance: focal distance + 10 mm

### Example 2

An ultraviolet curing type ink-jet ink was obtained in a similar way to that in Example 1, except that calcium carbonate particles (Brillant 1500 produced by SHIRAISHI CALCIUM KAISHA, LTD.) were substituted for titanium dioxide particles of the pigment. The D50 of the pigment was 685 nm. The viscosity of the ink at 40°C was 8.7 mPa·s, and the surface tension of the ink at 25°C was 37.0 mJ/m².

A piece of a sample for measuring spectral transmittance, which had a reflective film formed from the ink thereon, was produced by using the obtained ink with a similar operation to that in Example 1. The thickness of the reflective film was 4.5 µm.

### Example 3

An ultraviolet curing type ink-jet ink was obtained in a similar way to that in Example 1, except that calcium carbonate particles (Silver-W produced by SHIRAISHI CALCIUM KAISHA, LTD.) were substituted for titanium dioxide particles of the pigment. The D50 of the pigment was 350 nm. The viscosity of the ink at 40°C was 8.7 mPa·s, and the surface tension of the ink at 25°C was 37.0 mJ/m².

A piece of a sample for measuring spectral transmittance, which had a reflective film formed from the ink thereon, was produced by using the obtained ink with a similar operation to that in Example 1. The thickness of the reflective film was 4.3 µm.

### Example 4

An ultraviolet curing type ink-jet ink was obtained in a similar way to that in Example 1, except that barium sulfate particles (sedimentary barium sulfate 100 produced by Sakai Chemical Industry Co., Ltd.) were substituted for titanium dioxide particles of the pigment. The D50 of the pigment was 324 nm. The viscosity of the ink at 40°C was 8.7 mPa·s, and the surface tension of the ink at 25°C was 37.0 mJ/m².

A piece of a sample for measuring spectral transmittance, which had a reflective film formed from the ink thereon, was produced by using the obtained ink with a similar operation to that in Example 1. The thickness of the reflective film was 4.2 µm.

### Comparative Example 1

As a photopolymerizable oligomer, 5.0 mass% of polyester acrylate (ARONIX M-7300K produced by Toagosei Co., Ltd.,) was used; and as a photopolymerizable monomer, 18.8 mass% of 2-hydroxy-3-phenoxypropyl acrylate (M5700 produced by Toagosei Co., Ltd.), 18.8 mass% of 2-hydroxyethyl acrylate (LIGHT ACRYLATE HOA produced by Kyoeisha Chemical Co., Ltd.) and 39.9 mass% of isobornyl acrylate (LIGHT ACRYLATE IBXA produced by Kyoeisha Chemical Co., Ltd.) were used. An ultraviolet curing type ink-jet ink was obtained in a similar way to that in Example 1, except the above description.

The viscosity of the ink at 40°C was 9.9 mPa·s, and the surface tension of the ink at 25°C was 36.8 mJ/m².

A piece of a sample for measuring spectral transmittance, which had a reflective film formed from the ink thereon, was produced by using the obtained ink with a similar operation to that in Example 1. The thickness of the reflective film was 3.9 µm.

### Yellow index (YI) measurement

The spectral transmittance of light which passed through a piece of samples for measuring spectral transmittance, which had been prepared in Examples 1 to 4 and Comparative Example 1, was measured in a range of a wavelength of 300 nm to 800 nm by using a spectral transmittance meter provided with an integrating sphere (U-4100 produced by Hitachi, Ltd.). From the measurement result, the yellow index (YI) was determined. As is shown in Table 1, YI obtained in Example 1 was lower than that in Comparative Example 1, and thereby an improvement effect for the color tone was confirmed.

**[Table 1]**

| | Example 1 | Example 2 | Example 3 | Example 4 | Comparative Example 1 |
|---|---|---|---|---|---|
| Pigment | Titanium dioxide | Calcium carbonate | Calcium carbonate | Barium sulfate | Titanium dioxide |
| D50 | 350 | 685 | 350 | 324 | 350 |
| Viscosity (mPa·s) | 8.7 | 8.7 | 8.7 | 8.7 | 9.9 |
| Surface tension (mJ/m²) | 37 | 37 | 37 | 37 | 36.8 |
| Film thickness (µm) | 4.5 | 4.5 | 4.3 | 4.2 | 3.9 |
| YI | 6.9 | 2.9 | 2.8 | 2.9 | 7.3 |

### Production of light guide plate

The ink of Examples 1 to 4 or Comparative Example 1 was printed on the whole region of one side face of a PMMA resin sheet having a size of 370 mm x 320 mm and the thickness of 4 mm by ink-jet printing to form a pattern. The printed ink was cured by irradiation with ultraviolet rays to form reflective dots, and a light guide plate was obtained, which had the reflective dots formed of a dot pattern thereon. The coverage factor of the reflective dots was 50 area%. Furthermore, the ink was printed again, and a sample was also produced in which the coverage factor of the reflective dots was 100 area%.

### Alcohol resistance test

The faces having the reflective dots formed thereon on the samples of two levels having different coverage factors were rubbed 200 times with a gauze dampened with methanol while applying a load of 500 gf to the gauze. After the samples were rubbed, the sample was determined to be "A" when the outline of the reflective dots could be confirmed, the sample was determined to be "C" when the outline of the reflective dots could not be confirmed, and the sample was determined to be "B" when the outline was in a middle state between "A" and "C".

### Pencil hardness test

Different portions in the face having the reflective dots formed thereon were subjected to a scratch operation five times by using a pencil (product made from MITSUBISHI PENCIL CO., LTD., Uni) and with the load of 500 gf. The test was repeated while changing the hardness of the pencil, and the highest hardness among the hardnesses of the pencils by which scratch and/or exfoliation of the reflective dots had not been observed in the scratch operations of 4 times or more out of 5 times, was determined to be the pencil hardness of the reflective dots. The pencil hardness was measured according to JIS K5600-5-4, except the above conditions.

**[Table 2]**

| | Coverage factor (area%) | Alcohol resistance | Pencil hardness |
|---|---|---|---|
| Example 1 | 44 | A | 2H |
| | 100 | A-B | 2H |
| Example 2 | 48 | A | 2H |
| | 100 | A-B | 2H |
| Example 3 | 49 | A | 2H |
| | 100 | A-B | 2H |
| Example 4 | 48 | A | 2H |
| | 100 | A-B | 2H |
| Comparative Example 1 | 48 | C | H |
| | 100 | C | H |

As is shown in Table 2, it was confirmed that the ink of Examples 1 to 4 in which a photopolymerizable component was constituted only by a photopolymerizable compound that did not have a hydroxyl group could remarkably enhance its alcohol resistance in comparison with the ink of Comparative Example 1 containing a photopolymerizable compound that had the hydroxyl group. Furthermore, the Examples 1 to 4 showed higher pencil hardness as well in comparison with that of Comparative Example 1.

## Claims

1. An ultraviolet curing type ink-jet ink for a light guide plate comprising:
a pigment;
a photopolymerizable component; and
a photopolymerization initiator,
wherein the photopolymerizable component is composed of a photopolymerizable compound having no hydroxyl group.

2. The ultraviolet curing type ink-jet ink according to claim 1, wherein the photopolymerizable component comprises an aliphatic urethane (meth)acrylate having no hydroxyl group.

3. The ultraviolet curing type ink-jet ink according to claim 2, wherein the grass transition temperature of the aliphatic urethane (meth)acrylate is 40°C or higher.

4. The ultraviolet curing type ink-jet ink according to any one of claims 1 to 3, wherein the photopolymerizable component comprises a photopolymerizable monomer and a photopolymerizable oligomer.

5. The ultraviolet curing type ink-jet ink according to any one of claims 1 to 4, wherein the pigment comprises at least one inorganic oxide particle selected from the group consisting of a calcium carbonate particle, a barium sulfate particle and a titanium dioxide particle, and the cumulative 50% particle size D50 of the pigment is 200 to 1000 nm.

6. A method for manufacturing a light guide plate comprising:
a step of printing a pattern with the ink-jet ink according to any one of claims 1 to 5 on a surface of a transparent resin sheet by ink-jet printing; and
a step of curing the ink-jet ink forming the pattern with ultraviolet rays to form reflective dots.

7. A light guide plate comprising a transparent resin sheet and reflective dots provided on the transparent resin sheet, and being obtainable by the method according to claim 6.

8. The light guide plate according to claim 7, wherein the maximum thickness of the reflective dots is 20 µm or less, and a yellow index evaluated on the basis of the spectral transmittance measurement of a light that transmits through the reflective dot and the transparent resin sheet is 10 or less.

9. The light guide plate according to claim 7 or 8, wherein the transparent resin sheet is a polymethyl methacrylate resin sheet.

10. A surface light source device comprising:
the light guide plate according to any one of claims 7 to 9; and
a light source for supplying light to the end face of the light guide plate.

11. A transmission-type image display device comprising:
the surface light source device according to claim 10; and
a transmission-type image display unit provided opposite to the exit face of the surface light source device.
